(19) Europäisches Patentamt
European Patent Office
Office européen des brevets

(11) Veröffentlichungsnummer: **0 074 049**
**B1**

(12) # EUROPÄISCHE PATENTSCHRIFT

(45) Veröffentlichungstag der Patentschrift: **20.06.84**

(51) Int. Cl.³: **C 09 C 1/00**

(21) Anmeldenummer: **82107950.6**

(22) Anmeldetag: **30.08.82**

(54) **Wismutvanadat enthaltendes Gelbpigment und Verfahren zu seiner Herstellung.**

(30) Priorität: **05.09.81 DE 3135281**

(43) Veröffentlichungstag der Anmeldung: **16.03.83 Patentblatt 83/11**

(45) Bekanntmachung des Hinweises auf die Patenterteilung: **20.06.84 Patentblatt 84/25**

(84) Benannte Vertragsstaaten: **BE DE FR GB IT NL**

(56) Entgegenhaltungen: **FR - A - 2 476 665**

(73) Patentinhaber: **BASF Aktiengesellschaft, Carl-Bosch-Strasse 38, D-6700 Ludwigshafen (DE)**

(72) Erfinder: **Wienand, Henning, Dr., Robert-Bosch-Strasse 28, D-6832 Hockenheim (DE)**
Erfinder: **Ostertag, Werner, Dr., Oberer-Bergel-Weg 2, D-6718 Gruenstadt (DE)**
Erfinder: **Bittler, Knut, Dr., Kardinal-Wendel-Strasse 54, D-6720 Speyer (DE)**

**EP 0 074 049 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neuartige anorganische Gelbpigmente auf Basis Wismut-Vanadat/-Molybat, die gegebenenfalls auch noch Wismut-Wolframat enthalten, sowie Verfahren zu ihrer Herstellung.

Die am weitesten verbreiteten anorganischen Gelbpigmente sind Bleichromat-Pigmente, Cadmiumsulfid-Pigmente, Nickeltitangelb-Pigmente und Eisengelb-Pigmente. Unter diesen konventionellen Gelbpigmenten zeichnen sich die Chromat- und Cadmium-Pigmente durch gute Farbstärke, Farbreinheit und Deckkraft besonders aus. Nickeltitangelb zeigt gute Deckkraft, ist gegenüber den Chromat- und Cadmiumpigmenten aber relativ farbschwach. Die Eisengelbpigmente sind vor allem preiswert. Ihnen fehlt jedoch die Farbreinheit und die nötige Temperaturbeständigkeit. Bekanntlich beginnen die bräunlich aussehenden Eisengelbpigmente sich bereits bei Temperaturen zwischen 180 und 200°C umzuwandeln und gehen unter Abgabe von Wasser in Eisenrot über.

Leider sind die aus koloristischer Sicht hervorragenden Chromat- und Cadmium-Pigmente toxisch. Aufgrund der möglichen Gesundheitsgefahren, die sich bei ihrer Verwendung ergeben können, besteht die Notwendigkeit, Ersatzpigmente für Bleichromat- und für Cadmiumsulfid-Pigmente zu finden.

Die Ersatzpigmente sollen gute Farbstärke, Brillanz, Deckkraft und eine Reihe von Stabilitätskriterien aufweisen, von denen die Lichtstabilität und die Temperaturstabilität die wichtigsten sind.

Bei der Suche nach alternativen anorganischen Gelbpigmenten richtete sich das Interesse in den vergangenen Jahren verstärkt auf das nichttoxische monokline Wismutvanadat (US-PS 4 115 142). Obwohl Wistmutvanadat-Pigmente in ihren Farbeigenschaften dem Bleichromat bzw. Cadmiumsulfid sehr nahe kommen, haben sie den Nachteil, dass sie, verglichen mit Bleichromatpigmenten keine oder allenfalls nur geringe Korrosionsschutzwirkung aufweisen.

Im US-Patent 4 026 722 ist die Herstellung eines Wismutvanadatgelbs mit monokliner Kristallstruktur beschrieben, das die Zusammensetzung $BiVO_4 \cdot x\,Al_2O_3 \cdot y\,SiO_2$ hat, wobei $x = 0{,}25$–$2{,}0$ und $y = 0{,}1$–$3{,}5$ bedeuten und $x+y \geqq 1$ sein sollen. Bei der Herstellung des Pigments werden $Bi_2O_3$, $NH_4VO_3$ oder $V_2O_5$, $Al_2O_3$ und/oder $SiO_2$ trocken gemischt und bei 800 bis 1100°C calciniert. Anschliessend wird das Produkt nass gemahlen. Dabei entsteht ein leuchtend gelbes Pigment, das allerdings im Vergleich zu Cadmiumsulfid nicht sehr farbrein und auch nur wenig deckend ist.

Des weiteren werden in der DE-OS 2 933 778 gelbgrüne bis gelborange Wismutvanadat-Pigmente beschrieben, die ausser $BiVO_4$ noch $BiPO_4$ und $AlPO_4$ enthalten. Diese Pigmente werden auf trockenem Wege durch Calcinieren bei 700 bis 1100°C von Gemischen aus $BiPO_4$, $Al_2O_3$ und $V_2O_5$ erhalten. In der DE-OS 2 940 105 sind ebenfalls grünlich-gelbe Pigmente auf der Basis von Wismutvanadat beschrieben, die aus einem Produkt der Calcinierung aus $BiPO_4$, $V_2O_5$ und einem Oxid der Formel MeO bestehen, wobei Me Calcium, Barium, Magnesium oder Zink bedeutet. Je nach stofflicher Zusammensetzung und Brenntemperatur ändert sich der Farbton dieser Pigmente. Aber auch die so hergestellten Gelbpigmente sind im Vergleich zu Cadmiumsulfid wenig brillant, wenig deckend und im Farbton vielfach zu orange.

In der DE-OS 3 004 083 wird ein weiteres Gelbpigment auf Bais Wismutvanadat beschrieben, das neben $BiVO_4$ als Verdünnungsmittel 10 bis 90 Gew.% orthorhombisches Bariumsulfat enthält. Derartige Pigmente werden nasschemisch aus Wismutnitrat, Bariumnitrat und Alkalivanadat in schwefelsaurer Lösung hergestellt. Das Fällungsprodukt wird filtriert, gewaschen und bei Temperaturen von 400 bis 700°C gebrannt. Im Vergleich zu Cadmiumsulfid sind auch diese bariumsulfathaltigen Wismutvanadatpigmente wenig deckend.

In der GB-OS 2 069 990 sind schliesslich anorganische Gelbpigmente, bestehend aus $Bi_{1-x/3} \cdot M_x \cdot V_{1-x}O_4$ beschrieben, worin M Molybdän oder Wolfram bedeutet und die aus einer tetragonalen kristallinen scheelitartigen Phase bestehen, wenn M Molybdän bedeutet und wenn M Wolfram bedeutet neben der genannten tetragonalen Phase eine ortho-rhombische kristalline Phase von $Bi_2WO_6$ vorliegt. X kann Werte zwischen 0,075 und 0,317 im Falle des Molybdäns und im Falle des Wolframs zwischen 0,059 und 0,265 annehmen. Daraus ergibt sich eine gewichtsprozentige Zusammensetzung des Pigments im Falle des Molybdäns von

| | x = 0,075 | x = 0,317 |
|---|---|---|
| $Bi_2O_3$ | 70,5% | 65,9% |
| $MoO_3$ | 3,4% | 14,4% |
| $V_2O_5$ | 26,1% | 19,7% |

und im Falle des Wolframs von

| | x = 0,059 | x = 0,265 |
|---|---|---|
| $Bi_2O_3$ | 69,7% | 62,4% |
| $WO_3$ | 4,2% | 18,0% |
| $V_2O_5$ | 26,1% | 19,6% |

Liegt x unter den genannten Mindestwerten, so soll keine gute Kristallisation der tetragonalen Phase erhalten werden, während bei x-Werten oberhalb der genannten Maximalwerte im allgemeinen eine Verschlechterung der Farbstärke der Produkte beobachtet werden soll. In jedem Fall sind aber diese Pigmente bezüglich ihres Farbwertes und ihrer Deckkraft dem oben erwähnten monoklinen reinen Wismutvanadat deutlich unterlegen, wenn sie allerdings auf der anderen Seite diesem bezüglich ihrer Korrosionsschutzwirkung überlegen sind.

Es sind, zusammenfassend festgestellt, bisher noch keine Gelbpigmente auf Basis Wismutvanadat bekannt geworden, die sowohl in Farbton, in

Brillanz und Deckkraft dem Cadmiumsulfid als auch in ihrer Korrosionsschutzwirkung den konventionellen aber toxischen Bleichromat-Pigmenten gleichkommen.

Der vorliegenden Erfindung lag daher die Aufgabe zugrunde, ein wismutvanadathaltiges Gelbpigment bereitzustellen, das bezüglich seiner Farbwerte, Deckkraft und seiner Brillanz dem Cadmiumsulfid sowie seiner Korrosionsschutzwirkung dem Bleichromat möglichst gleichkommt, sowie ein Verfahren zu seiner Herstellung anzugeben.

Es wurde gefunden, dass diese Aufgabe gelöst werden kann durch ein Gelbpigment der Zusammensetzung

$$BiVO_4 \cdot x\,Bi_2MoO_6 \cdot y\,Bi_2WO_6,$$

wobei x Werte von 0,6 bis 2,25 und y Werte von 0 bis 0,1 hat.

Die erfindungsgemässen Pigmente weisen für x-Werte von 0,6 bis 2,25 folgende gewichtsprozentige Zusammensetzung auf:

| | x = 0,6 | x = 2,25 |
|---|---|---|
| $Bi_2O_3$ | 74,35% | 75,54% |
| $MoO_3$ | 12,52% | 19,09% |
| $V_2O_5$ | 13,19% | 5,36% |

Die erfindungsgemässen Pigmente sind brillante, überraschend farbkräftige und sehr farbreine Gelbpigmente. Die Deckkraft und Farbreinheit der erfindungsgemässen Pigmente ist hoch. Für die Zusammensetzung $BiVO_4 \cdot x\,Bi_2MoO_6$ sind für x = 0,75 bis 1,0 die Farbwerte Cadmiumsulfid am ähnlichsten.

Zur Herstellung des erfindungsgemässen Pigmentes kann man z.B. die wässrige Lösung eines Wismut(III)-salzes, z.B. Wismutnitrat $Bi(NO_3)_3$ mit den neutralen oder alkalischen Lösungen bzw. der gemeinsamen Lösung eines Alkali- oder Ammonium-Vanadats, -Molybdats und gegebenenfalls-Wolframats miteinander vermischen. Zweckmässigerweise legt man dabei die Wismutsalzlösung vor und lässt die Vanadat-/Molybdat- und gegebenenfalls Wolframat-Lösung bzw. -Lösungen unter Rühren zulaufen. Während der Fällung wird der pH-Wert im Fällungsbehälter auf Werte $\leqq 3{,}5$, zweckmässigerweise $<2$, besonders vorteilhaft $\leqq 1$, gehalten, was leicht dadurch erreicht werden kann, dass die vorgelegte Wismutlösung durch Zugabe einer Säure entsprechend sauer gestellt wird. Als Säuren kommen vor allem Schwefel- und Salpetersäure in Betracht. Die Temperatur während der Fällung kann zwischen 25 und 100°C liegen und wird zweckmässigerweise zwischen 75 und 95°C gehalten. Während des Fällungsprozesses fällt das Pigment in Form feiner Gelpartikelchen aus, deren Grösse durch die im Fällungsbehälter herrschenden Turbulenzen mitbestimmt wird.

Nach beendeter Fällung und vor der Filtration, Waschung und Trocknung ist es zweckmässig, falls erforderlich, den pH-Wert auf 3,0 bis 3,5 zu erhöhen und die Suspension 30 bis 120 Minuten gegebenenfalls unter Rühren, zweckmässig bei Temperaturen von 50 bis 100°C zu belassen, um das Gel zu altern. Die Anhebung des pH-Wertes erfolgt zweckmässig innerhalb eines Zeitraumes von 30 bis 90 Minuten.

Anschliessend an die Trocknung wird das Pigment bei Temperaturen von 300 bis 800°C, vorzugsweise 550 bis 650°C 0,5 bis 4 Stunden lang calciniert. Falls dem Pigment Verschnittmittel wie $PbSO_4$, $BaSO_4$, $CaSO_4$, $SiO_2$, $CaCO_3$, $Al_2O_3$ oder CaO zugesetzt werden, nimmt man den Verschnitt vorteilhafterweise vor dem Calcinieren vor.

Selbstverständlich können die Wismut-Vanadat-/Molybdat-Wolframat-Pigmente auch über reine Feststoffreaktionen bei erhöhter Temperatur, z.B. aus Wismutnitrat, Vanadinpentoxid und Ammonium-Molybdat bzw. -Wolframat hergestellt werden. Die daraus resultierenden Produkte sind aber in der Qualität den nasschemisch hergestellten Produkten meist unterlegen.

Gemäss einer bevorzugten Arbeitsweise säuert man eine gemeinsame Lösung eines Wismut(III)-salzes, eines Vanadates und eines Molybdates auf pH-Werte $<0$ an und hebt die saure Lösung mit alkalischen Lösungen, die gegebenenfalls eine Wolfram(VI)-Verbindung gelöst enthalten, auf pH-Werte von 0,1 bis 3,5 bei Temperaturen von 20 bis 95°C an, belässt das Fällungsprodukt und die Reaktionslösung 30 bis 120 Minuten lang bei Temperaturen von 50 bis 100°C, bevor man das Fällungsprodukt von der Reaktionslösung abtrennt, wäscht, gegebenenfalls trocknet und bei Temperaturen von 300 bis 800°C behandelt.

Nach dieser Arbeitsweise gelingt die Herstellung besonders feinteiliger und somit farbstarker Pigmente. Es ist von grosser Wichtigkeit, dass es bereits in der Fällungsstufe gelingt, Präzipitate geringer Teilchengrösse, -gleichförmigkeit und -grössenverteilung wegen des unvermeidlichen Kornwachstums während der anschliessenden Wärmebehandlung herzustellen. Diese Wärmebehandlung ist notwendig, um das Präzipitat in pigmentäre Teilchen überzuführen.

Das Ziel, in produktionstechnisch einfacher Weise wismutvanadathaltige Gelbpigmente in feinteiliger Form während der Fällungsstufe herzustellen, konnte überraschenderweise dadurch erreicht werden, dass man eine gemeinsame saure Lösung von Wismut, Vanadin und Molybdän im gewünschten molaren Verhältnis herstellt und diese dann mit einer wässrigen Alkalilösung unter Rühren vereinigt. Im Vergleich zu der eingangs erwähnten Arbeitsweise fällt bei sonst identischen Bedingungen (Konzentration der Fällungsagenzien, Temperatur usw.) das Präzipitat viel feinteiliger und frei von Agglomeraten an. Anschliessendes Filtrieren, Waschen und Tempern des Fällungsproduktes führt zu Pigmenten hoher Brillanz und Farbstärke sowie hoher Licht- und Wetterechtheit. Wie Analysen zeigen, weisen die Präzipitate die erwünschte molare Zusammensetzung auf, was sicher durch das Vorliegen einer gemeinsamen Lösung, in der die Bi-, V- und Mo- bzw. Bi-, V-, Mo- und W-Ionen in optimaler Durchmischung vorliegen, erleichtert wird.

Als Wismut(III)-salz kommt neben Wismut(III)-acetat insbesondere Wismut(III)-nitrat in Betracht. Die Vanadinkomponente kann insbesondere Alkalimetavanadat oder Ammoniumvanadat sein, während als Molybdänverbindungen insbesondere Alkalimolybdate, und zwar jeweils insbesondere die Natrium- oder Kaliverbindungen, in Frage kommen. Man stellt zweckmässig die wässrigen Lösungen der einzelnen Komponenten getrennt her, wobei man möglichst gesättigte Lösungen herstellt. Bei der Herstellung der Wismutsalzlösungen setzt man Säuren, zweckmässig die Säure des Anions des jeweiligen Wismutsalzes zu. Die getrennt hergestellten Lösungen werden vereinigt und, falls erfordelich, auf einen pH-Wert <0 gestellt. Zur Fällung wird die vereinigte Lösung mit alkalischen Lösungen, z.B. insbesondere Alkalilaugen, aber auch Alkalicarbonaten oder Ammoniak auf einen pH-Wert von 0,1 bis 3,5 gebracht. Die Zugabe sollte innerhalb von 5 bis 60 Minuten erfolgen. Während des Fällungsvorganges soll die Reaktionslösung eine Temperatur von 20 bis 95°C aufweisen. Wesentlich ist, dass nach beendigter Fällung wie bei der zuerst beschriebenen Arbeitsweise die Lösung noch 30 bis 120 Minuten lang auf Temperaturen von 50 bis 100°C gehalten wird, bevor das Fällungsprodukt abgetrennt wird. Während der Fällung und der Nacherwärmung wird die Reaktionslösung vorteilhaft, z.B. durch Rühren, bewegt. Es ist aber auch möglich, die saure und die zur Fällung benötigte alkalische Lösung gleichzeitig in ein vorgelegtes Volumen der Reaktionslösung mit einem gegensinnigen Drall z.B. über Düsen oder die Lauge mit Drall unter die Oberfläche der vorgelegten sauren Lösung einzuführen, wodurch die Reaktionspartner ebenfalls innig miteinander vermischt werden.

Nach der Abtrennung des Präzipitats von der Reaktionslösung wird dieses, wie oben angegeben, auf Temperaturen von 300 bis 800°C gehalten. Diese Wärmebehandlung kann an dem trokkenen Produkt, oder im Rahmen einer hydrothermalen Behandlung an der Pigmentsuspension erfolgen. Bei trockener Temperung wählt man zweckmässig höhere Temperaturen von 500 bis 800°C, vorzugsweise von 570 bis 650°C, während bei der hydrothermalen Behandlung niedrigere Temperaturen von 300 bis 360°C genügen.

Die Herstellung von $BiVO_4$-haltigen Gelbpigmenten vom Typ $BiVO_4 \cdot xBi_2MoO_6 \cdot yBi_2WO_6$ lässt sich am zweckmässigsten durch Zusammenfügen einer sauren Lösung einer Bi-, V- und Mo-Verbindung enthaltenden Lösung mit einer wolframathaltigen alkalischen Lösung und anschliessendem Nachrühren und Tempern in der oben beschriebenen Weise herstellen. Als Wolfram-Verbindungen kommen Wolfram(VI)-Verbindungen in Betracht.

Soll dem erfindungsgemässen Pigment ein Verschnittmittel, wie $BaSO_4$, zugesetzt werden, so lässt sich im Falle des $BaSO_4$ dessen Herstellung vorteilhaft in den Herstellungsprozess, wie er oben beschrieben ist, integrieren, indem der sauren gemeinsamen Lösung von Wismut-, Vanadin- und Molybdänionen, Bariumionen, z.B. als Bariumnitrat zugegeben werden, und der alkalischen Lösung Natriumsulfat beigemischt wird. Das $BaSO_4$ fällt dann gleichzeitig mit dem Wismutvanadatvorprodukt in äusserst feiner Verteilung an, was für die Koloristik des Gelbpigmentes von Vorteil ist.

Die Stabilität der erfindungsgemässen Pigmente kann durch Auffällen eines Überzugs aus einer schwerlöslichen anorganischen Verbindung, z.B. Zirkonsilikat, in bekannter Weise erhöht werden. Auch andere anorganische Überzüge, wie sie beispielsweise bei der Stabilisierung von Bleichromatpigmenten bekannt sind, z.B. Aluminiumoxid, Aluminiumphosphat, Antimon(III)-oxid, können mit Erfolg angewendet werden.

Die erfindungsgemässen Pigmente zeichnen sich durch eine hohe Farbreinheit im Gelbton aus, der demjenigen des Cadmiumsulfids bzw. des Bleichromats sehr nahe kommt, wobei sie gleichzeitig eine dem Bleichromat ähnliche Korrosionsschutzwirkung haben.

Unabhängig von ihrer Zusammensetzung sind die erfindungsgemässen Pigmente temperaturstabil, lichtecht und chemisch beständig.

Die Anwendung der erfindungsgemässen Gelbpigmente liegt im Bereich der Anstrichstoffe und Kunststoffeinfärbungen.

Beispiel 1

$BiVO_4 \cdot Bi_2MoO_6$ Molverhältnis 1:1

In einem 6 l-Rührgefäss werden vorgelegt:

310 ml verd. Wismutnitratlösung (17,3 Gew.% Bi)
50 ml $HNO_3$ conc. (65 Gew.%)
2150 ml $H_2O$

Zur Vorlage werden unter Rühren bei 90°C über einen Zeitraum von 60 Minuten eine Lösung aus 14,6 g $NH_4VO_3$ und 30,2 g $Na_2MoO_4 \cdot 2\ H_2O$ in 2450 ml $H_2O$ zugetropft. Der pH-Wert liegt nach dem Zulauf bei 0,4 und wird durch Zugabe von 105 ml 50 gew.%iger Natronlauge auf pH 3 eingestellt (Zulaufzeit 1 h). Das Pigment wird noch 1 Stunde lang bei 90°C nachgerührt, anschliessend abgesaugt, nitratfrei gewaschen, getrocknet und 1 Stunde lang bei 600°C getempert.

Soll die Lichtechtheit und Temperaturbeständigkeit des Pigmentes noch zusätzlich verbessert werden, so kann z.B. ein Überzug aus $ZrO_2/SiO_2$ auf das Pigment aufgefällt werden. Dabei wird der wässrigen Pigmentsuspension nach der Fällung eine verdünnte Lösung aus $ZrOCl_2 \cdot 6\ H_2O$ über einen Zeitraum von 60 min zugegeben. Der $ZrO_2$-Gehalt bezogen auf das Gesamtpigment beträgt 3 Gew.-%. Der pH-Wert liegt während der Zugabe im Bereich 3 bis 4, die Temperatur beträgt 90°C. Anschliessend wird der pH-Wert durch Zugabe von konzentrierter Natronlauge auf 7,5 angehoben. Eine verdünnte Wasserglaslösung (26 Gew.% $SiO_2$) wird über einen Zeitraum

von weiteren 60 Minuten der Pigmentsuspension zugetropft. Die zugegebene $SiO_2$-Menge entspricht 3 Gew.-%, bezogen auf das Gesamtpigment.

Das stabilisierte Pigment wird in einer Farbausreibung mit Cadmiumsulfid verglichen. Fig. 1 zeigt die Remissionskurven beider Pigmente. Aus dem Verlauf dieser Remissionskurven ist zu ersehen, dass sich mit dem erfindungsgemässen Pigment Cadmiumsulfid praktisch identisch nachstellen lässt. Kurve 1 gibt die Remissionskurve von Cadmiumsulfid (Sicotherm® K 1201) und Kurve 2 diejenige des gemäss diesem Beispiel hergestellten erfindungsgemässen Pigments wieder. Auf der Ordinate ist die Remission in Prozent und auf der Abszisse die Wellenlänge angegeben.

Sowohl die Remissionskurven als auch sämtliche Farbwerte werden von in Alkydharz dispergierten Proben gemessen. Die Schichtdicke der Proben liegt bei 100 µm, es werden je 0,5 g Pigment in 4,45 g Lack dispergiert. Die Remissionskurven werden mit dem Messgerät DMC 25 (Fa. Zeiss) aufgenommen. Die Farbwerte der Proben werden mit dem Dreibereichsfarbmessgerät D 25-9 AA (Fa. Hunterlab) gemessen. Sie werden hier wie in den folgenden Beispielen im Cielab-System angegeben, wobei L* die Helligkeit, a* und b* die jeweiligen Farbabstände und ΔE die Farbdifferenz gegen eine Vergleichsprobe bedeuten. Die Lichtstabilität der unbeschichteten und beschichteten Probe wird durch Bestrahlung der Farbausreibung ermittelt. Als Strahlungsquelle wird eine Osram HBO 200 W-4-Birne mit Filter KG 1 (Fa. Schott), 1 mm Dicke, verwendet. Der Abstand Lichtquelle–Probe beträgt 200 mm, die Strahlungsdauer liegt bei 45 Stunden. Es werden die jeweiligen Farbdifferenzen (ΔE-Werte) der Proben vor und nach Bestrahlung ermittelt:

$1{,}0\ BiVO_4 \cdot 1{,}0\ Bi_2MoO_6$ ohne Beschichtung ΔE 3,10

$1{,}0\ BiVO_4 \cdot 1{,}0\ Bi_2MoO_6$ Beschichtung:
3,2 Gew.% $ZrO_2$ ΔE 2,85
2,8 Gew.% $SiO_2$

Aus den ΔE-Werten lässt sich die verbesserte Lichtstabilität der mit $ZrO_2/SiO_2$ beschichteten Probe ersehen.

Beispiel 2

Wismutvanadat mit zunehmendem Anteil an Wismutmolybdat

Gemäss Beispiel 1 werden Wismutvanadate mit zunehmendem Anteil an Wismutmolybdat hergestellt. Die jeweiligen Mengen, Zusammensetzungen und Verfahrensparameter sind in Tabelle 1 zusammengefasst:

Tabelle 1

| | a) | b) | c) | d) | e) | f) |
|---|---|---|---|---|---|---|
| Vorlage | 289 ml $Bi(NO_3)_3$Lsg.<br>50 ml $HNO_3$ conc.<br>2150 ml $H_2O$ | 454 ml<br>50 ml<br>2000 ml | 310 ml<br>50 ml<br>2150 ml | 413 ml<br>50 ml<br>2050 ml | 1020 ml*<br>50 ml<br>1400 ml | 1299 ml*<br>50 ml<br>1100 ml |
| Zulauf innerhalb von 60 Minuten | 29,2 g $NH_4VO_3$<br>12,1 g $Na_2MoO_4 \cdot 2H_2O$<br>2450 ml $H_2O$ | 29,2 g<br>36,3 g<br>2450 ml | 14,6 g<br>30,2 g<br>2450 ml | 14,6 g<br>45,4 g<br>2450 ml | 14,6 g<br>68,0 g<br>2450 ml<br>+10 ml 50 gew.%ige NaOH | 14,6 g<br>90,7 g<br>2450 ml<br>+10 ml 50 gew.%ige NaOH |
| Temperatur | 85 °C | 86 °C | 85 °C | 85 °C | 86 °C | 85 °C |
| pH-Wert nach Zulauf | 0,6 | 0,5 | 0,4 | 0,9 | 0,6 | 0,4 |
| NaOH-Zugabe (50 Gew.%) innerhalb von 60 Minuten | 102 ml | 145 ml | 107 ml | 133 ml | 206 ml | 254 ml |
| pH-Wert nach NaOH-Zugabe (50 gew.%ig) | 3 | 3 | 3 | 3 | 3 | 3 |
| Pigmentzusammensetzung | $1{,}0\ BiVO_4$<br>$0{,}2\ Bi_2MoO_6$ | $1{,}0\ BiVO_4 \cdot$<br>$0{,}6\ Bi_2MoO_6$ | $1{,}0\ BiVO_4 \cdot$<br>$1{,}0\ Bi_2MoO_6$ | $1{,}0\ BiVO_4 \cdot$<br>$1{,}5\ Bi_2MoO_6$ | $1{,}0\ BiVO_4 \cdot$<br>$2{,}25\ Bi_2MoO_6$ | $1{,}0\ BiVO_4 \cdot$<br>$3{,}0\ Bi_2MoO_6$ |

* $Bi(NO_3)_3$-Lsg. in Bspl. 2a, b, c, d: 17,3 Gew.% Bi
e, f: 11,0 Gew.% Bi

In Tabelle 2 sind die Farbwerte der einzelnen Beispiele zu sehen. Zum Vergleich werden sowohl die Ausgangssubstanzen $BiVO_4$, $Bi_2MoO_6$ als auch CdS mit in die Tabelle aufgenommen. Den Werten ist zu entnehmen, dass mit zunehmendem $Bi_2MoO_6$-Anteil im Pigment der Gelbanteil (b*-Wert) zunimmt. Ein Maximum zeigt sich bei der Zusammensetzung $1{,}0\ BiVO_4 \cdot 1{,}0\ Bi_2MoO_6$.

Die in den Tabellen unter a) und f) aufgeführten Pigmente sind zum Vergleich aufgeführt und weisen einen Wismutmolybdatanteil der kleiner (a) bzw. grösser (f) als der beanspruchte Anteil ist.

Die Ergebnisse in Tabelle 2 zeigen anschaulich, dass die Zusammensetzungen in ihren Farbwerten deutlich schlechter sind, als die beanspruchten Zusammensetzungen.

Tabelle 2
CIELAB-Farbwerte von $BiVO_4$ mit steigendem $Bi_2MoO_6$-Anteil

| Pigmentzusammensetzung | | | | a) | b) | c) | d) | e) | f) | |
|---|---|---|---|---|---|---|---|---|---|---|
| | $BiVO_4$ | 1 Mol | 0 | 1 | 1 | 1 | 1 | 1 | 1 | CdS |
| | $Bi_2MoO_6$ | 0 | 1 Mol | 0,2 | 0,6 | 1 | 1,5 | 2,25 | 3 | (Sicotherm K1201) |
| L* | | 83,50 | 87,10 | 76,07 | 83,54 | 89,17 | 88,8 | 88,36 | 87,97 | 88,08 |
| a* | | −0,48 | −9,63 | 3,19 | −8,42 | −15,98 | −16,31 | −16,08 | −13,69 | −12,39 |
| b* | | 41,29 | 42,85 | 71,82 | 97,12 | 100,21 | 93,55 | 84,00 | 66,09 | 107,75 |
| ΔE zu CdS | | 27,58 | 22,87 | 25,20 | 8,20 | 3,75 | 4,47 | 6,11 | 11,31 | |

Beispiel 3
$BiVO_4$-haltige Pigmente im Verschnitt mit $BaSO_4$

$BiVO_4$-haltige Pigmente der Zusammensetzung $BiVO_4 \cdot xBi_2MoO_6$ für x = 0,6; 0,75; 1,0; 1,25; 1,5; 2,0 und 2,25 werden vergleichend mit reinem $BiVO_4$ (Beispiel 1 der DE-OS 2 727 863, in den Diagrammen mit I bezeichnet) und einem Gelbpigment der Formel $Bi_{1-x/3}Mo_xV_{1-x}O_4$ für x = 0,213 (Beispiel 1 gemäss GB-OS 2 069 990, in den Diagrammen mit II bezeichnet) mit $BaSO_4$ verschnitten, um das Färbevermögen der Pigmente zu demonstrieren.

Um vergleichbare Ergebnisse zu erhalten, wird der $BaSO_4$-Verschnitt so gewählt, dass jeweils 5 g $BiVO_4$ mit 95 g Verschnittmittel gemischt werden, wobei die Molybdatanteile der Pigmente dem Verschnittmittel zugerechnet werden (s. Tabelle 3). Die in Alkydharz dispergierten Proben werden auf weisses Papier appliziert und deren Remissionskurven sowie die Farbwerte ermittelt (Gerät DMC 25 Fa. Zeiss). Aus den Remissionskurven wird der Remissionsanstieg im Wellenlängenbereich 450-525 nm gemessen (Δ in %) und gegen den $Bi_2MoO_6$-Anteil (Abszisse) der Pigmente aufgetragen (Fig. 2). Aus der Kurve ist ersichtlich, dass bei jeweils gleichem $BiVO_4$-Gehalt die Remissionswerte mit zunehmendem $Bi_2MoO_6$-Gehalt zunehmen und für die Pigmentzusammensetzungen $BiVO_4 \cdot xBi_2MoO_6$ bei x = 0,7 bis 1,5 ein Maximum aufweisen.

Trägt man die gegenüber Cadmiumsulfid (Sicotherm K 1201, in den Figuren mit III bezeichnet) ermittelten Farbabstände ΔE (CIE) der mit $BaSO_4$ verschnittenen Pigmente gegen den $Bi_2MoO_6$-Gehalt der Pigmente auf, so erhält man die in Fig. 3 gezeigte Abhängigkeit. Bei jeweils gleichem $BiVO_4$-Anteil im Verschnitt mit $BaSO_4$ liegen auch hier die Pigmente der Zusammensetzung $BiVO_4 \cdot xBi_2MoO_6$ für x = 0,7 bis 1,5 dem Vergleichspigment Sicotherm K 1201 am nächsten.

Tabelle 3
(Pigmentverschnitt mit $BaSO_4$)

| Pigmentzusammensetzung | Verschnitt (g) | | | Farbwerte | | | ΔE(CIE) zu CdS | ΔRemission (%) 450 bis 525 nm |
|---|---|---|---|---|---|---|---|---|
| | $BiVO_4$: | $Bi_2MoO_6$: | $BaSO_4$ | L* | a* | b* | | |
| $BiVO_4$ . 0,6 $Bi_2MoO_6$ | 5 | 5,65 | 89,3 | 88,96 | −12,49 | 51,77 | 10,83 | 54,6 |
| $BiVO_4$ . 0,75 $Bi_2MoO_6$ | 5 | 7,1 | 87,9 | 90,67 | −17,35 | 66,31 | 5,8 | 68,8 |
| $BiVO_4$ . 1,0 $Bi_2MoO_6$ | 5 | 9,4 | 85,6 | 91,26 | −17,31 | 67,77 | 7,31 | 71,3 |
| $BiVO_4$ . 1,25 $Bi_2MoO_6$ | 5 | 11,7 | 83,3 | 89,76 | −17,29 | 70,18 | 8,86 | 69 |
| $BiVO_4$ . 1,5 $Bi_2MoO_6$ | 5 | 14,1 | 80,9 | 91,21 | −17,20 | 61,77 | 4,07 | 67 |
| $BiVO_4$ . 2,0 $Bi_2MoO_6$ | 5 | 18,8 | 76,2 | 88,94 | −15,88 | 60,69 | 2,06 | 63 |
| $BiVO_4$ . 2,25 $Bi_2MoO_6$ | 5 | 21,1 | 73,9 | 91,86 | −16,21 | 54,22 | 8,84 | 64 |
| $BiVO_4$ . 0,09 $Bi_2Mo_3O_{12}$ (Bspl. 1 aus GB 2 069 990) | 5 | 1,2 | 93,8 | 91,68 | − 6,58 | 24,5 | 38,75 | 28,5 |
| $BiVO_4$ (Bspl. 1 aus DE-OS 27 27 863) | 5 | | 95 | 91,61 | −12,79 | 44,4 | 18,23 | 53,2 |
| Sicotherm K 1201 | 5 (CdS) | | 95 | 87,23 | −16,32 | 61,75 | - | 61,5 |

Beispiel 4

Wismutvanadat/Molybdat mit Calciumsulfat als Füllstoff

Pigmentzusammensetzung 1,0 $BiVO_4 \cdot 0{,}75\, Bi_2MoO_6 \cdot 0{,}25\, CaSO_4$

In einem 6 l-Rührgefäss werden vorgelegt:

464 ml $Bi(NO_3)_3$-Lsg. (11 Gew.-% Bi)
7,38 g $Ca(NO_3)_2 \cdot 4\, H_2O$
50 ml $HNO_3$ conc. (65 Gew.%)
2100 ml $H_2O$

Die vorgelegte Lösung wird auf 90°C erhitzt. Unter Rühren werden über einen Zeitraum von 60 Minuten folgende Komponenten, gelöst in 2450 ml $H_2O$, zugetropft:

14,6 g $NH_4VO_3$
22,7 g $Na_2MoO_6 \cdot 2\, H_2O$
4,44 g $Na_2SO_4$
10 ml NaOH conc. (50 Gew.%)

Der pH-Wert nach dem Zulauf beträgt 0,9. Durch Zugabe von 104 ml NaOH conc. (50 Gew.%) über einen Zeitraum von 60 Minuten wird der pH-Wert auf 3,0 eingestellt. Anschliessend wird abgesaugt, nitratfrei gewaschen und getrocknet. Nach Temperung bei 600°C (1 h) zeigt das Pigment folgende Farbwerte:

| | | | | |
|---|---|---|---|---|
| L* | 80,05 | a* – 6,70 | b* 89,66 | ΔE zu CdS 13,78 |
| CdS | 88,08 | –12,39 | 107,75 | |

Beispiel 5

$BiVO_4 \cdot 0{,}75\, Bi_2MoO_6$: Fällung aus gemeinsamer saurer Lösung

A) 371 ml $Bi(NO_3)_3$-Lösung mit einem Bi-Gehalt von 11 Gew.% ($\vartheta = 1{,}28$ g/cm³) werden in einem 2 l-Rührkolben mit 50 ml $HNO_3$ (65 Gew.%) versetzt. Dazu gibt man unter Rühren 11,7 g $NH_4VO_3$ und eine Lösung von 18,1 g $Na_2MoO_4 \cdot 2\, H_2O$ in 85 ml $H_2O$ und 15 ml $HNO_3$ (65 Gew.%). Die auf 90°C erhitzte Lösung hat einen pH-Wert von <0. Durch Zugabe von 135 ml Natronlauge (50 Gew.%) während eines Zeitraumes von 30 min wird der pH-Wert auf 0,5 angehoben.

Das Pigment wird 2 h lang bei 90°C nachgerührt, abgesaugt, nitratfrei gewaschen, getrocknet und anschliessend bei 600°C eine Stunde lang getempert.

Das erhaltene Pigment hat die folgende Zusammensetzung: 1,0 $BiVO_4 \cdot 0{,}75\, Bi_2MoO_6$.

| | Bi | Mo | V |
|---|---|---|---|
| Analyse Theorie (%) | 66,9 | 9,2 | 6,5 |
| gefunden (%) | 65,4 | 9,6 | 5,5 |

Die BET-Oberfläche des ungetemperten Fällungsproduktes beträgt 74,7 m²/g.

Farbwerte:

Zur Ermittlung der Farbwerte werden 0,5 g getempertes Pigment in 4,45 g Alkydharz dispergiert und mit einer Schichtdicke von 100 µm auf eine weisse Unterlage appliziert. Die Farbwerte werden mit dem Gerät D 25-9AA der Firma Hunterlab ermittelt. Zudem wird der Farbabstand ΔE zu einem Cadmiumsulfid (Sicotherm K 1201) bestimmt.

Farbwerte:

L* 87,8 $C^*_{ab}$ 110,5 H° 96,4°

a* – 12,3 b* 109,8
ΔE zu CdS: 0,34

Korrosionsschutzwirkung gem. Salzsprühtest DIN 50 021 (ASTM B 117-73)

Folgende Pigmente werden hinsichtlich ihrer korrosionisschützenden Eigenschaft vergleichend geprüft

Bleichromat (Sicomin L 1630 S)
Wismutvanadat (gem. DOS 27 27 863, Bsp. 1)
Wismutvanadat/Wismutmolybdat Beispiel 5A

Die Pigmente werden mit untengenannten Füllstoffen in einem Alkydharz-Bindemittel 30 min lang mit einem Dispermaten dispergiert.

Zusammensetzung der Rezeptur:

15,00 g Pigment wie oben
9,38 g Kaolin
9,38 g Eisenoxid $Fe_2O_3$
3,75 g Talkum
52,00 g Alkydharzkombination
5,71 g Xylol

Die dispergierten Proben werden auf sandgestrahlten Blechen appliziert (Schichtdicke 110 µm) und am oberen Teil des Prüfbleches zusätzlich mit einer Deckschicht aus Eisenglimmer versehen (Dicke der Deckschicht 100 µm). Die Korrosionsprüfung wird nach DIN 50 021 (entsprechend ASTM B 117-73) durchgeführt. Die Proben werden nach 240 h bzw. 480 h auf ihren Rostgrad (DIN 53 210 bzw. ISO 4628/I-1978) ihren Blasengrad (DIN 53 209/ASTM D 714-56) sowie auf die Unterrostung hin untersucht. Die Ergebnisse sind in nachfolgender Tabelle festgehalten.

Aus der Tabelle 4 ist ersichtlich, dass das molybdathaltige Wismutvanadat in seinen Korrosionsschutzeigenschaften mit Bleichromat vergleichbar ist und besser abschneidet als reines Wismutvanadat.

Tabelle 4: Ergebnisse der Korrosionsprüfung

| Pigment | | 240 h Salzsprühtest | | | 480 h Salzsprühtest | | | Unterrostung |
|---|---|---|---|---|---|---|---|---|
| | | Rostgrad | Blasengrad | | Rostgrad | Blasengrad | | |
| | | | DIN 53 209 | ASTM D 714-56 | | DIN 53 209 | ASTM D 714-56 | |
| $PbCrO_4$ | Grundbesch. | Ri 1 | m 2/g 2 | 8 F | Ri 2 | m 5/g 1–2 | 8 D | Ri 2 |
| | Deckbesch. | ohne Befund | | | Rr 1 mm Ri 1 | m 2/g 1–2 | 8 F | |
| $BiVO_4$ | Grundbesch. | Ri 1 | m 4/g 2 | 8 MD | Ri 3 | m 5/g 1–4 | 6 D | Ri 3–4 |
| | Deckbesch. | Rr 4 mm Ri 1 | m 2/g 2 | 8 F | Rr 1 mm Ri 1 | m 5/g 1–3 | 8 D | |
| $BiVO_4$ | Grundbesch. | Ri 0–1 | m 5/g 2 | 8 D | Ri 2 | m 5/g 1–2 | 8 D | Ri 2 |
| 0,75 $Bi_2MoO_6$ | Deckbesch. | ohne Befund | | | Rr 1 mm Ri 1 | m 2/g 1–2 | 8 F | |

B) Vergleichsbeispiel mit Zugabe der Vanadat/Molybdat-Lösung zur sauren Wismutnitratlösung

In einem 6 l-Rührkolben werden vorgelegt:

258 ml einer salpetersauren Wismutnitratlösung (17,3 Gew.% Bi, $\vartheta = 1{,}463\ g/cm^3$)
50 ml $HNO_3$ (65 Gew.%)
2,2 l $H_2O$

Die Lösung wird auf 85°C erhitzt, der pH-Wert bei der angegebenen Temperatur beträgt 0,7.

In der Vorlage wird über einen Zeitraum von 60 Minuten bei 85°C eine Lösung von 14,6 g $NH_4VO_3$ und 22,7 g $Na_2MoO_4 \cdot 2\ H_2O$ in 2,45 l $H_2O$ zugetropft. Nach dem Zulauf wird der pH-Wert durch Zugabe von 103 ml NaOH (50 Gew.%) auf einen Wert von 3,0 eingestellt. Die Zulaufzeit der Natronlauge beträgt 60 Minuten.

Das Produkt wird anschliessend abgesaugt, nitratfrei gewaschen und bei 600°C im Muffelofen während 60 Minuten getempert. Der Glühverlust während der Temperung beträgt 5,7%.

Das Pigment weist folgende Zusammensetzung auf: $BiVO_4 \cdot 0{,}75\ Bi_2MoO_6$.

| | Bi | Mo | V |
|---|---|---|---|
| Analyse Theorie | 66,9% | 9,2% | 6,5% |
| gefunden | 66% | 9,6% | 6,5% |

Die BET-Oberfläche des ungetemperten Fällungsproduktes beträgt 26 $m^2/g$.

Farbwerte der Probe:

L* = 88,2
C* = 93,5
ab
H° = 99,0
a* = –14,6
b* = 92,3
ΔE zu CdS: 3,6

Aus diesen Werten des Beispiels 5A und 5B ist zu ersehen, dass das Pigment des Beispiels 5A einen wesentlich höheren Gelbanteil und einen deutlich geringeren Farbabstand zu CdS (Sicotherm K 1201) aufweist.

Beispiel 6

Pigmentzusammensetzung $BiVO_4 \cdot 0{,}75\ Bi_2MoO_6$: Fällung durch gleichzeitigen Zulauf

Es wird eine Lösung hergestellt aus

| | |
|---|---|
| 371 ml | einer salpetersauren Wismutnitratlösung (11 Gew.% Bi, $\vartheta = 1{,}28\ g/cm^3$) |
| 50 ml | $HNO_3$ (65 gew.%ig) |
| 11,7 g | $NH_4VO_3$ |
| 18,15 g | $Na_2MoO_4 \cdot 2\ H_2O$ gelöst in 85 ml $H_2O$ und 15 ml $HNO_3$ (35 Gew.%) |

Durch gleichzeitigen Zulauf obiger Lösung, deren pH-Wert <0 beträgt (Zeitraum 30′) mit 173 ml einer 25 gew.%igen NaOH-Lösung in einen 2 l-Rührkolben wird das Pigment bei einem pH-Wert von 0,5 und einer Temperatur von 80°C ausgefällt. Durch Zugabe von 2 ml $HNO_3$ (65 Gew.%) wird der pH-Wert während der Nachrührzeit (2 Stunden/80°C) bei 0,5 gehalten.

Das Fällungsprodukt wird anschliessend abgesaugt, nitratfrei gewaschen, getrocknet und bei 60°C im Muffelofen 60 Minuten lang getempert. Der Glühverlust während der Temperung beträgt 2,5%.

Das getemperte Pigment weist folgende Zusammensetzung auf:

$BiVO_4 \cdot 0{,}75\ Bi_2MoO_6$

Zusammensetzung: $BiVO_4 \cdot 0{,}75\ Bi_2MoO_6$

| | Bi | Mo | V |
|---|---|---|---|
| Analyse Theorie (%) | 66,9 | 9,2 | 6,5 |
| gefunden (%) | 65,6 | 9,0 | 6,7 |

Die BET-Oberfläche des ungetemperten Fällungsproduktes beträgt 68,4 $m^2/g$.

Farbwerte:

L* 87,5 $C^*_{ab}$ 108,8 H° 97,1°

a* –13,46 b* 107,98

ΔE zu CdS 1,2

Beispiel 7

Pigmentzusammensetzung $BiVO_4 \cdot 1,0\ Bi_2MoO_6$: Fällung des Pigmentes aus gemeinsamer Lösung

In einem 2 l-Rührgefäss werden 72,8 g $(Bi(NO_3)_3 \cdot 5\ H_2O$ in 20 ml $HNO_3$ (65 Gew.%) und 40 ml $H_2O$ gelöst. In die Lösung gibt man 5,85 g $NH_4VO_3$, 140 ml $HNO_3$ (65 Gew.%) und 250 ml Wasser. Es entsteht eine gelbe, klare Lösung, in die weiterhin eine Lösung aus 12,1 g $Na_2MoO_4 \cdot 2\ H_2O$, 20 ml $H_2O$ und 6 ml $HNO_3$ (65 Gew.%) gegeben wird. Die Farbe der Lösung ist gelb-grünlich, der pH-Wert bei 32°C beträgt -1,1. Über einen Zeitraum von 60 Minuten lässt man unter Rühren 250 ml 25%ige NaOH und 110 ml NaOH 50%ig zulaufen. Die Reaktionstemperatur wird hierbei im Bereich $\leqq$60°C gehalten, der End-pH-Wert liegt bei 3,0. Anschliessend wird die Suspension noch 1 h lang bei 80°C gerührt, abgesaugt, gewaschen, getrocknet und bei 600°C 1 h lang getempert.

Das getemperte Produkt weist folgende Zusammensetzung auf:

$BiVO_4 \cdot 1,0\ Bi_2MoO_6$

| | Bi | Mo | V |
|---|---|---|---|
| Analyse Theorie | 67,14% | 10,27% | 5,45% |
| gefunden | 66,5 % | 9,9 % | 5,5 % |

Die BET-Oberfläche des ungetemperten Fällungsproduktes beträgt 33,5 m²/g.

Farbwerte der getemperten Probe.

$L^* = 87,43$ $C^*_{ab}$ : 101,7
$a^* = -13,59$ $H°^*$ : 97,8°
$b^* = 100,76$

$\Delta E$ zu CdS = 2,10

Beispiel 8

Pigmentzusammensetzung $BiVO_4 \cdot 0,75\ Bi_2MoO_6 \cdot 0,1\ Bi_2WO_6$

In einem 2 l-Rührkolben werden vorgelegt:

401 ml 11 gew.%ige $Bi(NO_3)_3$-Lösung und 50 ml $HNO_3$ (65 Gew.%). Dazu gibt man 11,7 g $NH_4VO_3$ und anschliessend 18,1 g $Na_2MoO_4 \cdot 2\ H_2O$ gelöst in 85 ml $H_2O$ und 15 ml $HNO_3$ (65 Gew.%). Der pH-Wert der Vorlage ist <0 bei 80°C. Bei 80°C lässt man 260 ml 25 gew.%ige NaOH, in der 3,3 g $Na_2WO_4 \cdot 2\ H_2O$ gelöst werden, zulaufen. Der Zeitraum des Zulaufes liegt bei 30 Minuten, der End-pH-Wert der Suspension beträgt 0,5. Anschliessend wird 2 h bei 80°C nachgerührt, das Produkt abgesaugt, nitratfrei gewaschen, getrocknet und bei 60°C 1 h lang getempert.

Die getemperte Probe weist die Zusammensetzung $BiVO_4 \cdot 0,75\ Bi_2MoO_6 \cdot 0,1\ Bi_2WO_6$ auf.

| | Bi | Mo | V | W |
|---|---|---|---|---|
| Analyse Theorie | 66,29% | 8,45% | 5,98% | 2,16% |
| gefunden | 63,9 % | 9,2 % | 6,3 % | 2,3 % |

Farbwerte der Probe:

$L^* = 87,6$ $a^* = -13,87$ $b^* = 103,23$
$C^*_{ab} = 104,2$ $H° = 97,7°$

$\Delta E$ zu CdS: 1,8

**Patentansprüche**

1. Wismutvanadat enthaltendes Gelbpigment der Zusammensetzung

$BiVO_4 \cdot x\ Bi_2MoO_6 \cdot y\ Bi_2WO_6$

wobei x Werte von 0,6 bis 2,25 und y Werte von 0 bis 0,1 besitzen.

2. Verfahren zur Herstellung des Wismutvanadat enthaltenden Gelbpigmentes nach Anspruch 1, dadurch gekennzeichnet, dass man eine gemeinsame Lösung eines Wismut(III)-salzes, eines Vanadats und eines Molybdates auf pH-Werte <0 ansäuert und die saure Lösung mit alkalischen Lösungen, die gegebenenfalls eine Wolfram(VI)-Verbindung gelöst enthalten, auf pH-Werte von 0,1 bis 3,5 bei Temperaturen von 20 bis 95°C anhebt, das Fällungsprodukt und die Reaktionslösung 30 bis 120 Minuten lang bei Temperaturen von 50 bis 100°C belässt, bevor man das Fällungsprodukt von der Reaktionslösung abtrennt, wäscht und bei Temperaturen von 300 bis 800°C tempert.

3. Verfahren nach Anspruch 2, dadurch gekennzeichent, dass man das Produkt vor der Temperung trocknet.

4. Verfahren nach Anspruch 2, dadurch gekennzeichent, dass man die Temperung bei Temperaturen von 500 bis 800°C durchführt.

5. Verfahren zur Herstellung des Wismutvanadat enthaltenden Gelbpigments nach Anspruch 1, welches noch zusätzlich eine schwerlösliche anorganische Verbindung enthält, nach Ansprüchen 2 bis 3, dadurch gekennzeichnet, dass vor der Abtrennung des Pigmentes auf das Pigment eine schwerlösliche anorganische Verbindung aufgefällt wird.

6. Verfahren nach Ansprüchen 2 bis 4, dadurch gekennzeichnet, dass dem Pigment vor dem Calcinieren ein Verschnittmittel zugesetzt wird und somit ein Verschnittmittel enthaltendes Gelbpigment erhalten wird.

**Revendications**

1. Pigment jaune, contenant un vanadate de bismuth de la composition

$BiVO_4 \cdot x\ Bi_2MoO_6 \cdot y\ Bi_2WO_6$,

où x vaut de 0,6 à 2,25 et y vaut de 0 à 0,1.

2. Procédé de préparation d'un pigment jaune au vanadate de bismuth suivant la revendication 1, caractérisé en ce que l'on acidifie une solution commune d'un sel du bismuth trivalent, d'un vanadate et d'un molybdate à un pH inférieur à 0, puis on amène la solution acide à l'aide de solutions basiques, contenant éventuellement un dérivé du tungstène tétravalent dissous, à un pH compris entre 0,1 et 3,5 entre 20 et 95°C et on maintient le précipité et la solution réactionnelle pendant 30 à 120 minutes entre 50 et 100°C, avant de séparer le précipité de la solution réactionnelle, de le laver et de le calciner à des températures de 300 à 800°C.

3. Procédé suivant la revendication 2, caractérisé en ce que le produit précipité est séché avant la calcination.

4. Procédé suivant la revendication 2, caractérisé en ce que la calcination est réalisée à des températures de 500 à 800°C.

5. Procédé suivant les revendications 2 à 3 pour la préparation d'un pigment jaune au vanadate de bismuth selon la revendication 1, contenant en outre un composé inorganique peu soluble, caractérisé en ce que l'on dépose sur le pigment, avant sa séparation, un composé inorganique difficilement soluble par précipitation.

6. Procédé suivant les revendications 2 à 4, caractérisé en ce que l'on ajoute au pigment, préalablement à sa calcination, un composé d'allongement et obtient par conséquent un pigment jaune allongé.

**Claims**

1. A yellow pigment which contains bismuth vanadate and has the composition

$$BiVO_4 \cdot x\, Bi_2MoO_6 \cdot y\, Bi_2WO_6$$

where x is from 0.6 to 2.25 and y is from 0 to 0.1.

2. A process for the preparation of a yellow pigment, containing bismuth vanadate, as claimed in claim 1, wherein a solution containing a bismuth(III) salt, a vanadate and a molybdate is acidified until the pH is <0, the pH of the acidic solution is then brought to 0.1–3.5, at from 20 to 95°C, by means of an alkaline solution which may or may not contain a dissolved tungsten(VI) compound, the precipitated product and the reaction solution are left at from 50 to 100°C for from 30 to 120 minutes and then the precipitated product is separated from the reaction solution, washed, and heated at from 300 to 800°C.

3. A process as claimed in claim 2, wherein the product is dried before being heated.

4. A process as claimed in claim 2, wherein the product is heated at from 500 to 800°C.

5. A process as claimed in claim 2 or 3 for the preparation of a yellow pigment, containing bismuth vanadate, as claimed in claim 1, which additionally contains a sparingly soluble inorganic compound, wherein the sparingly soluble inorganic compound is precipitated onto the pigment before the latter is isolated.

6. A process as claimed in claims 2 to 4, wherein the pigment, before being calcined, has an extender added to it, an extender-containing yellow pigment thus being obtained.

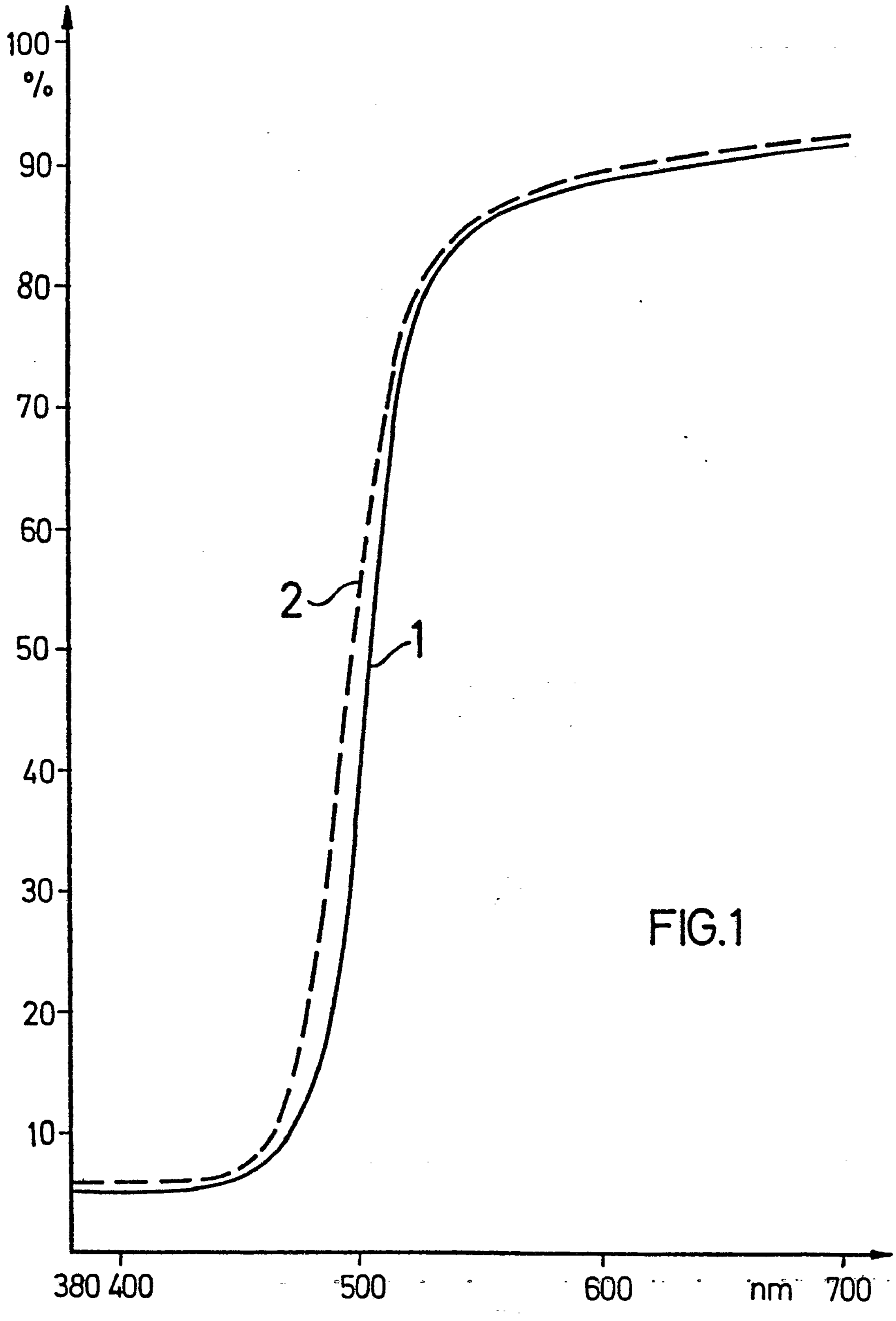


FIG.1

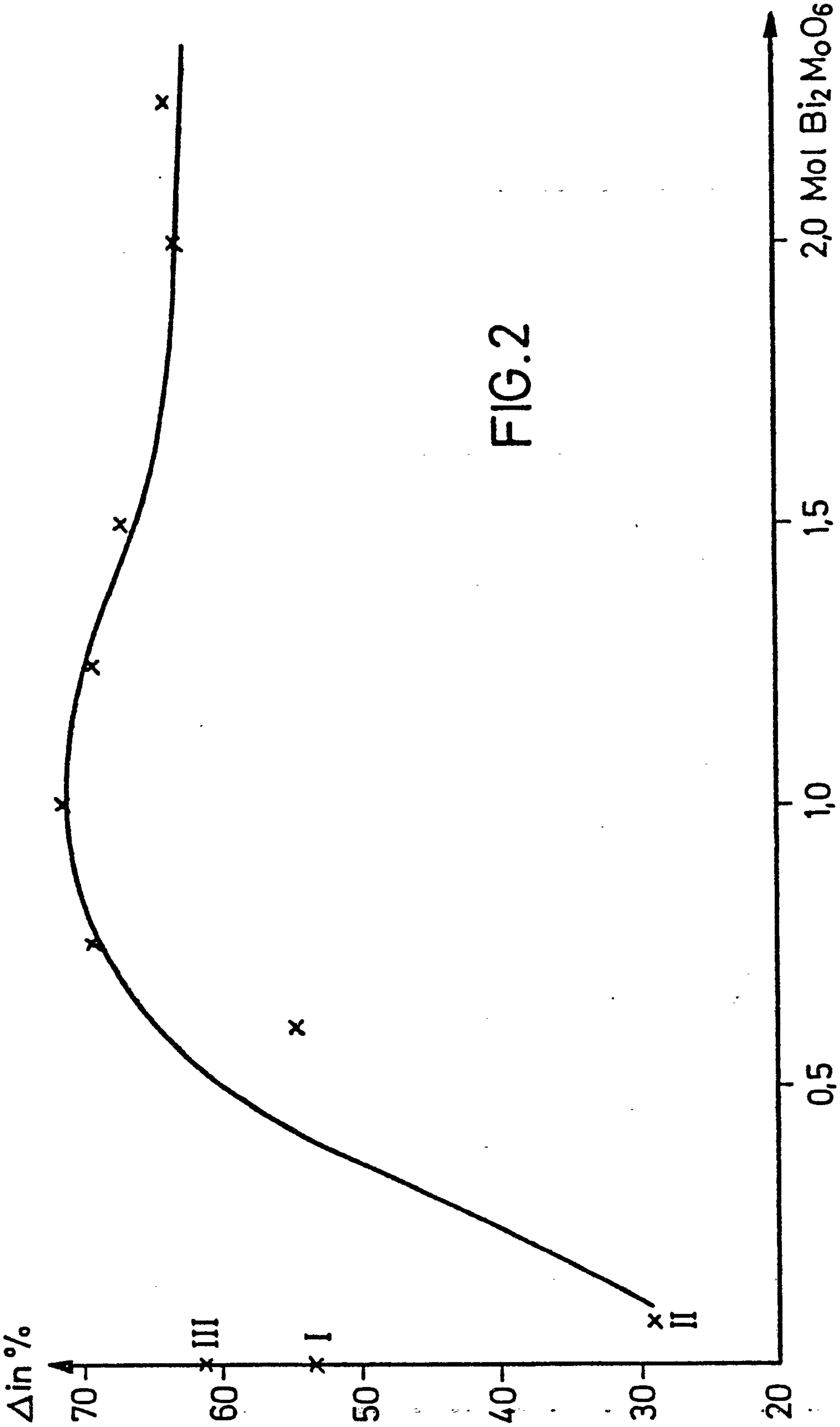


FIG. 2

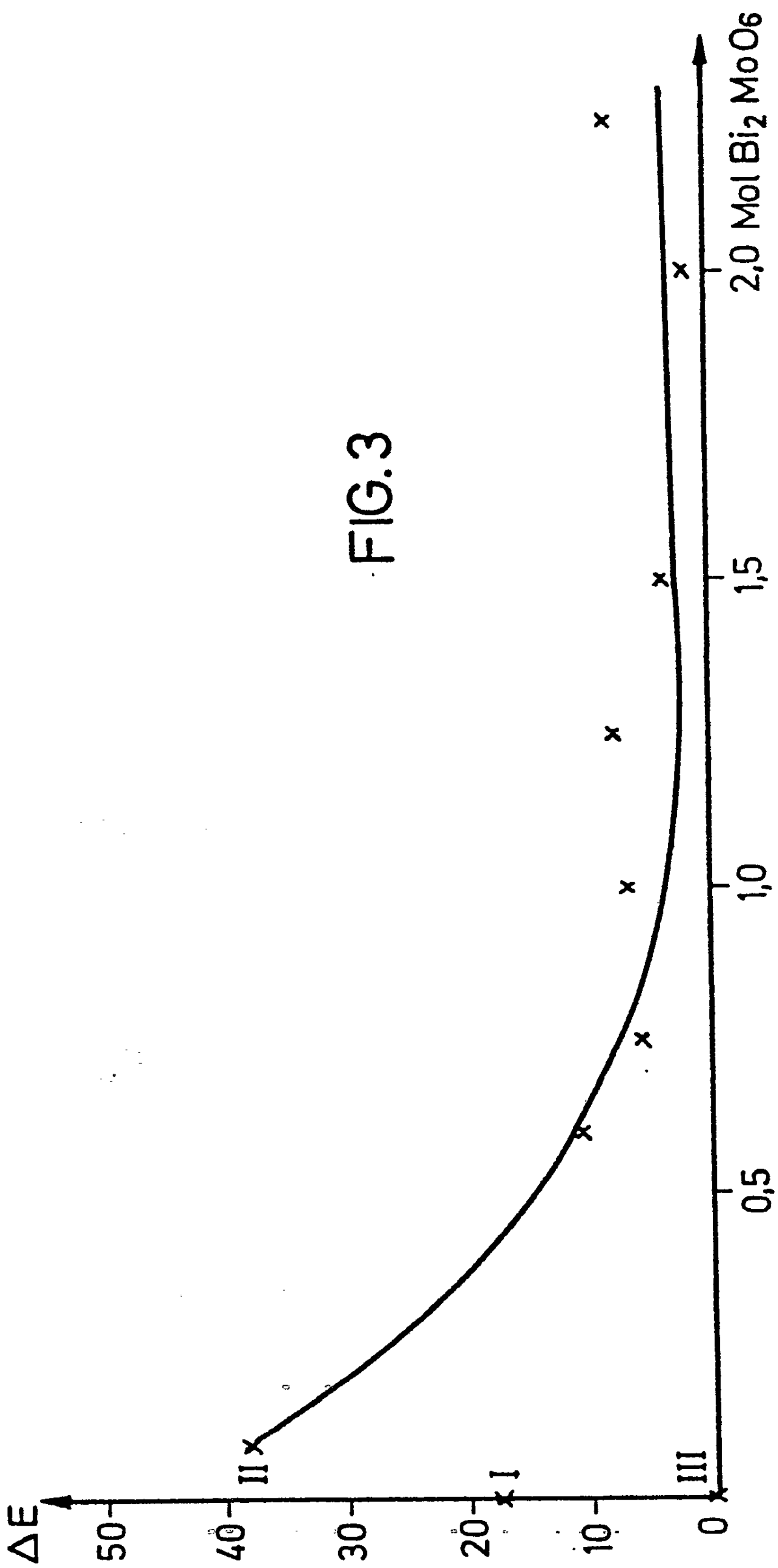


FIG.3